# EUROPÄISCHE PATENTSCHRIFT

(11) **EP 3 744 045 B1**
(45) Veröffentlichungstag und Bekanntmachung des Hinweises auf die Patenterteilung: **13.09.2023**
(21) Anmeldenummer: 19711580.1
(22) Anmeldetag: 15.03.2019
(51) Int. Cl.: H04L 12/28, H04W 48/18, H04W 88/06

(54) **VERFAHREN ZUR KONFIGURATION UND/ODER STEUERUNG VON ENDGERÄTEN DER HAUSAUTOMATION**
METHOD FOR CONFIGURING AND/OR CONTROLLING HOME AUTOMATION TERMINALS
PROCÉDÉ DE CONFIGURATION ET/OU DE COMMANDE D'APPAREILS TERMINAUX D'UNE INSTALLATION DE DOMOTIQUE

(30) Priorität: 16.03.2018 DE 102018106197
(43) Veröffentlichungstag der Anmeldung: 02.12.2020
(73) Patentinhaber: Schneider Electric Industries SAS, 92500 Rueil Malmaison (FR)
(72) Erfinder: FABER, Dirk, 50674 Köln (DE); BÜHNE, Christoph, 51709 Marienheide (DE); GIEREND-BECK, Christian, 50354 Hürth (DE)
(74) Vertreter: Manitz Finsterwald Patent- und Rechtsanwaltspartnerschaft mbB
(86) Internationale Anmeldenummer: PCT/EP2019/056530
(87) Internationale Veröffentlichungsnummer: WO 2019/175375

(56) Entgegenhaltungen:
- WO-A1-2017/032517
- WO-A1-2017/071951
- US-A1- 2013 014 219
- US-A1- 2018 030 780
- Shahin Farahani: "ZIGBEE WIRELESS NETWORKS AND TRANSCEIVERS", , 13. Februar 2009 (2009-02-13), Seiten 1-364, XP055424846, Gefunden im Internet: URL:http://www.chiaraburatti.org/uploads/t eaching/ZigBee-Libro.pdf [gefunden am 2017-11-14]

## Beschreibung

Die vorliegende Erfindung betrifft ein Verfahren zur Konfiguration und/oder Steuerung von Endgeräten der Hausautomation.

Unter einem Endgerät der Hausautomation sind beispielsweise (per Funk) ansteuerbare Schalter, Dimmer oder andere Aktoren zu verstehen. Ebenfalls sind unter diesem Begriff Sensoren zu verstehen, die bei der Haus- / Gebäudeautomation verwendet werden. Beispiele hierfür sind Helligkeits-, Feuchtigkeits- oder Windsensoren.

Durch die Kombination verschiedener Endgeräte kann eine Hausautomation durchgeführt werden, beispielsweise können mittels automatischer Schalter zu vorbestimmten Zeiten die Lichter eingeschaltet und/oder die Rollläden herabgelassen werden. Ebenfalls ist es möglich, beispielsweise bei zu starker Sonneneinstrahlung automatisch einen Sonnenschutz auszufahren. Die Endgeräte werden üblicherweise mittels eines Steuergeräts (z.B. mittels eines Smartphones) konfiguriert, um beispielsweise einzustellen, wann ein Rollladen herabgelassen werden soll.

Endgeräte der Hausautomation werden also in verschiedenen Einsatzszenarien verwendet, wodurch es notwendig wird, einen flexiblen Einsatz der Endgeräte zu ermöglichen. In diesen verschiedenen Einsatzszenarien muss jeweils eine einfache und reibungslose Konfiguration der Endgeräte sichergestellt sein. Zudem müssen die Endgeräte möglichst kostengünstig sein.

Die WO 2017/032517 A1 beschreibt ein Mesh-Netzwerk, mit verschiedenen Nodes, wobei die Nodes entweder als Router oder als End-Node betrieben werden können. Es kann ein und derselbe Node sowohl als Router als auch als End-Node betrieben werden und zwischen diesen Betriebsmodi hin- und hergeschaltet werden.

Die US 2018/030780 A1 beschreibt ein Netzwerk zur Heimautomatisation.

Aus der WO 2017/071951 A1 ist ein Mesh-Netzwerk bekannt.

Die US 2013/014219 A1 betrifft einen sogenannten MOSHI-Server, welcher die Verbindung zwischen dem Internet und einem Mesh-Netzwerk zur Hausautomation herstellt. Hierdurch wird es dann möglich, mittels eines Mobiltelefons von unterwegs Geräte zur Hausautomation zu steuern.

Aus Shahin Farahani: "Zigbee Wireless Networks and Transceivers" (XP055424846) sind ZigBee Mesh-Netzwerke bekannt.

Es ist die der Erfindung zugrunde liegende Aufgabe, ein Verfahren zur Konfiguration von Endgeräten der Hausautomation anzugeben, welches es gestattet, kostengünstig herstellbare Endgeräte flexibel einzusetzen.

Diese Aufgabe wird erfindungsgemäße durch ein Verfahren mit den Merkmalen des Anspruchs 1 gelöst.

Erfindungsgemäß wird ein Verfahren zur Konfiguration und/oder Steuerung von Endgeräten der Hausautomation angegeben, wobei das Verfahren die Schritte umfasst:
- Herstellen einer drahtlosen Punkt-zu-Punkt-Verbindung zwischen einem Steuergerät und zumindest einem Endgerät der Hausautomation,
- Durchführen einer Datenkommunikation zwischen dem Steuergerät und dem Endgerät mittels der Punkt-zu-Punkt-Verbindung, um das Endgerät zu konfigurieren und/oder zu steuern,
- Umstellen des Endgeräts zum Abbau der Punkt-zu-Punkt-Verbindung und zur Herstellung einer drahtlosen Verbindung mit einem Mesh-Netzwerk,
- Durchführen einer Datenkommunikation zwischen dem Endgerät und einem Hub des Mesh-Netzwerks mittels des Mesh-Netzwerks, um das Endgerät zu konfigurieren und/oder zu steuern.

Erfindungsgemäß ist das Endgerät also in der Lage, zunächst eine Punkt-zu-Punkt-Verbindung (PTP-Verbindung - beispielsweise mittels Bluetooth) zu seiner Konfiguration und/oder Steuerung zur Verfügung zu stellen und anschließend die Punkt-zu-Punkt-Verbindung abzubauen und stattdessen eine Verbindung mit einem Mesh-Netzwerk (beispielsweise einem ZigBee-Netzwerk) herzustellen, um dann die Konfiguration und/oder die Steuerung mittels des Mesh-Netzwerks zu ermöglichen.

Erfindungsgemäß wird es auf diese Weise ermöglicht, verschiedene Einsatzszenarien abzudecken. So kann beispielsweise die Punkt-zu-Punkt-Verbindung verwendet werden, wenn nur ein oder wenige Endgeräte zu konfigurieren und/oder zu steuern sind, wobei das Steuergerät dann jeweils eine einzelne Verbindung zu dem jeweiligen Endgerät herstellt (mittels einer jeweiligen Punkt-zu-Punkt-Verbindung), wodurch jedes einzelne Endgerät dann mittels der Punkt-zu-Punkt-Verbindung konfiguriert und/oder gesteuert wird. Ist eine Vielzahl von Endgeräten vorhanden, so kann in den Modus des Mesh-Netzwerks "umgeschaltet" werden, wodurch mittels des Mesh-Netzwerks sämtliche in dem Netzwerk enthaltenen Endgeräte (mittels des Mesh-Netzwerks) konfiguriert und/oder gesteuert werden können.

Die Konfiguration und/oder Steuerung mittels Punkt-zu-Punkt-Verbindung eignet sich insbesondere für sogenannte "Device Kits" oder "Room Kits", welche insbesondere die Automation einer einzelnen Funktion oder eines einzelnen Raumes gestatten. Die Konfiguration und/oder Steuerung mittels des Mesh-Netzwerks hingegen ist dagegen für sogenannte "House Kits" vorgesehen, bei welchen die Endgeräte über ein komplettes Gebäude verteilt sind. Mittels des Mesh-Netzwerks ist es dann beispielsweise möglich, mehrere Endgeräte als Verbund anzusehen, wobei z.B. mittels eines Bewegungssensors Bewegungen und mittels eines Luftqualitätssensors die Luftqualität ermittelt wird, wobei aus den gewonnenen Informationen des Verbunds dann eine Steuerung bzw. ein Steuerbefehl abgeleitet werden kann (z.B. Lüften und/oder Einschalten eines Ventilators).

Das erfindungsgemäße Verfahren ermöglicht es durch den Übergang von der Punkt-zu-Punkt-Verbindung auf das Mesh-Netzwerk, dass beispielsweise früher erworbene Endgeräte, die bislang "nur" mittels Punkt-zu-Punkt-Verbindung konfiguriert wurden, in das Mesh-Netzwerk aufgenommen werden können, um so eine kostengünstige Erweiterung des Mesh-Netzwerks zu ermöglichen.

Erfindungsgemäß ist überdies von Vorteil, dass durch den Abbau der Punkt-zu-Punkt-Verbindung vor der Herstellung der Verbindung mit dem Mesh-Netzwerk das Endgerät nur beispielsweise über ein einzelnes Funkmodul verfügen muss, wobei das Funkmodul dann sowohl zur Herstellung der Punkt-zu-Punkt-Verbindung als auch zur Herstellung der Verbindung mit dem Mesh-Netzwerk eingerichtet sein kann. Hierdurch wird die Integration verschiedener Hardware für die Punkt-zu-Punkt-Verbindung bzw. für das Mesh-Netzwerk vermieden, wodurch die verwendeten Endgeräte kostengünstig und damit wirtschaftlich herstellbar sind.

Die Erfindung schafft somit eine flexible Lösung, welche geringe Hardwareanforderungen an die Endgeräte stellt.

Es versteht sich, dass hierin meist von einem einzelnen Endgerät gesprochen wird, welches beispielsweise über die Punkt-zu-Punkt-Verbindung oder das Mesh-Netzwerk konfiguriert und/oder gesteuert wird. Das erfindungsgemäße Verfahren kann aber auch für mehrere Endgeräte gleichzeitig oder nacheinander eingesetzt werden.

Der Hub des Mesh-Netzwerks kann dazu dienen, eine Kommunikation innerhalb des Mesh-Netzwerks zu koordinieren und/oder zu initiieren. Insbesondere kann das Steuergerät mit dem Hub des Mesh-Netzwerks kommunizieren, um das Endgerät zu konfigurieren und/oder zu steuern, wobei die zur Konfiguration und/oder Steuerung des Endgeräts notwendigen Daten von dem Steuergerät an den Hub und von dem Hub anschließend an das Endgerät übertragen werden. Der Hub kann zusätzlich über eine Netzwerk- / Internetverbindung verfügen, welche es gestattet die zur Konfiguration und/oder Steuerung des Endgeräts notwendigen Daten auch an weiter entfernte Endgeräte oder andere Hubs zu übertragen (oder von solchen Hubs zu empfangen).

Unter der Konfiguration des Endgeräts ist insbesondere das Übermitteln eines gewünschten Verhaltens gemeint, beispielsweise indem dem Endgerät Schaltzeiten, Schaltintervalle, zu übermittelnde Daten, zu empfangende Daten und dergleichen mitgeteilt werden. Das Steuern des Endgeräts meint insbesondere die Übermittlung von zeitnah auszuführenden Steuerbefehlen, beispielsweise das Einschalten eines Schalters.

Nach der Umstellung von der Punkt-zu-Punkt-Verbindung auf die Verbindung mit dem Mesh-Netzwerk ist es natürlich auch möglich, die Verbindung mit dem Mesh-Netzwerk abzubauen bzw. zu beenden und wieder die Punkt-zu-Punkt-Verbindung mit dem Steuergerät herzustellen. Danach kann das Steuergerät das Endgerät mittels der Punkt-zu-Punkt-Verbindung konfigurieren und/oder steuern, indem eine Datenkommunikation durchgeführt wird.

Vorteilhafte Weiterbildungen der Erfindung sind der Beschreibung, den Figuren sowie den Unteransprüchen zu entnehmen.

Gemäß einer ersten vorteilhaften Ausführungsform unterhält und/oder verwendet das Endgerät zu einem Zeitpunkt jeweils entweder nur die drahtlose Punkt-zu-Punkt-Verbindung oder nur die drahtlose Verbindung mit dem Mesh-Netzwerk. Eine Funk-Hardware des Endgeräts kann dadurch sowohl für die Punkt-zu-Punkt-Verbindung als auch für das Mesh-Netzwerk verwendet werden. Dementsprechend kann das Endgerät nur genau einen Sender und genau einen Empfänger oder genau einen Transceiver aufweisen.

Gemäß einer weiteren vorteilhaften Ausführungsform empfängt der Hub eine an dem Steuergerät vorgenommene Konfigurierung und/oder Steuerung des Endgeräts von dem Steuergerät und übermittelt die Konfigurierung und/oder die Steuerbefehle an das Endgerät. Beispielsweise kann das Steuergerät verwendet werden, um für einen Schalter einzustellen, zu welchen Zeitpunkten ein Schaltvorgang ausgelöst wird. Die so vorgenommene Konfigurierung/Steuerung des Endgeräts wird dann von dem Steuergerät z.B. per WLAN an den Hub übertragen. In dem Hub wird dann bevorzugt eine Umsetzung der empfangenen Konfiguration und/oder der empfangenen Steuerbefehle vorgenommen, und zwar derart, dass die Konfiguration/Steuerung mittels des Mesh-Netzwerks (beispielsweise per ZigBee) an das Endgerät übermittelt werden kann. Das Endgerät wendet die empfangene Konfiguration und/oder die empfangenen Steuerbefehle schließlich an, sodass das Endgerät die konfigurierten/befohlenen Schaltvorgänge zu den jeweils gewünschten Zeiten vornimmt.

Gemäß einer weiteren vorteilhaften Ausführungsform verwendet das Endgerät ein Software-Defined-Radio (SDR) zur Herstellung der drahtlosen Punkt-zu-Punkt-Verbindung und der drahtlosen Verbindung mit dem Mesh-Netzwerk. Insbesondere wird zur Herstellung der drahtlosen Punkt-zu-Punkt-Verbindung und der drahtlosen Verbindung mit dem Mesh-Netzwerk dasselbe Software-Defined-Radio verwendet (jeweils mit unterschiedlicher Software-Konfiguration). Ein Software-Defined-Radio bezeichnet insbesondere einen Transceiver, bei welchem ein Anteil und bevorzugt der Hauptteil der Signalverarbeitung mittels Software verwirklicht wird bzw. zumindest von einer Software beeinflusst wird.

Bevorzugt verwendet das Endgerät ein PTP-Softwareabbild zur Herstellung der drahtlosen Punkt-zu-Punkt-Verbindung und ein Mesh-Softwareabbild zur Herstellung der drahtlosen Verbindung mit dem Mesh-Netzwerk. Die Softwareabbilder enthalten bevorzugt jeweils die Daten, die das Software-Defined-Radio benötigt, um entsprechend mittels Punkt-zu-Punkt-Verbindung oder Mesh-Netzwerk kommunizieren zu können. Durch den Einsatz des Software-Defined-Radios im Endgerät wird das Umstellen von der Punkt-zu-Punkt-Verbindung und das Herstellen der Verbindung mit dem Mesh-Netzwerk besonders einfach gestaltet, da im Endgerät lediglich das PTP-Softwareabbild durch das Mesh-Softwareabbild ersetzt werden muss. Sobald in dem Software-Defined-Radio das Mesh-Softwareabbild verwendet wird, kann dann keine drahtlose Punkt-zu-Punkt-Verbindung hergestellt werden, dafür ist es dann aber möglich, eine Verbindung mit dem Mesh-Netzwerk herzustellen.

Unter einer Punkt-zu-Punkt-Verbindung ist eine Datenkommunikation zu verstehen, bei welcher nur genau zwei Teilnehmer miteinander kommunizieren. In einem Mesh-Netzwerk hingegen können auch mehrere Teilnehmer jeweils mit mehreren anderen Teilnehmern kommunizieren. Im Mesh-Netzwerk kann es auch möglich sein, dass zumindest ein Teil der Teilnehmer eingerichtet ist, Datenpakete der Datenkommunikation weiterzuleiten. Auf diese Weise können auch Teilnehmer des Mesh-Netzwerks miteinander kommunizieren, die nicht in direkter Funkreichweite zueinander angeordnet sind. Kurz gesagt ist jeweils ein Teilnehmer (z.B. ein Endgerät oder der Hub) mit einem oder mehreren anderen Teilnehmern verbunden, wobei die übertragenen Informationen bevorzugt von Teilnehmer zu Teilnehmer weitergereicht werden, bis sie das Ziel erreichen.

Gemäß einer weiteren vorteilhaften Ausführungsform sind das PTP-Softwareabbild und das Mesh-Softwareabbild beide in dem Endgerät gespeichert. Alternativ oder zusätzlich wird das Mesh-Softwareabbildung (und/oder auch das PTP-Softwareabbild) mittels der Punkt-zu-Punkt-Verbindung an das Endgerät übertragen. Weiter alternativ oder zusätzlich wird das PTP-Softwareabbild (und/oder auch das Mesh-Softwareabbild) mittels des Mesh-Netzwerks an das Endgerät übertragen.

Sind beide Abbilder in dem Endgerät gespeichert, kann jeweils das gerade benötigte Softwareabbild zur Ausführung z.B. mittels des Software-Defined-Radios gebracht werden. Beispielsweise kann das Endgerät einen Datenspeicher (z.B. Flash-Speicher) umfassen, in welchem das PTP-Softwareabbild und das Mesh-Softwareabbild gespeichert sind. Zusätzlich zu diesen beiden Softwareabbildern kann auch ein Werkseinstellungs-Softwareabbild gespeichert sein, welches es gestattet, das Endgerät in seinen Auslieferungszustand zurückzusetzen.

Der Datenspeicher und das Software-Defined-Radio können jeweils als integrierte Schaltkreise aufgebaut sein, welche mittels eines SPI-Busses (Serial-Peripheral-Interface-Bus) verbunden sind. Das jeweils benötigte Softwareabbild kann dann mittels des SPI-Busses an das Software-Defined-Radio übertragen werden und dort zur Herstellung der drahtlosen Punkt-zu-Punkt-Verbindung oder zur Herstellung der drahtlosen Verbindung mit dem Mesh-Netzwerk verwendet werden. Selbstverständlich sind neben dem SPI-Bus auch andere Möglichkeiten der Datenübertragung denkbar, beispielsweise die Verwendung des I²C-Busses.

Ist in dem Endgerät zunächst nur das PTP-Softwareabbild gespeichert, um die drahtlose Punkt-zu-Punkt-Verbindung zu ermöglichen, so kann das Mesh-Softwareabbild z.B. von dem Steuergerät mittels der Punkt-zu-Punkt-Verbindung an das Endgerät übertragen werden. Das Mesh-Softwareabbild kann dann im Endgerät in den Datenspeicher oder direkt in das Software-Defined-Radio geladen und ausgeführt werden. Beispielsweise kann das Steuergerät vor der Übertragung des Mesh-Softwareabbilds an das Endgerät in einer Datenbank (beispielsweise auf einem Server des Anbieters) nach der neuesten Version des Mesh-Softwareabbilds suchen und diese neueste Version herunterladen. Hierdurch ergibt sich der Vorteil, dass das Mesh-Softwareabbild jeweils auf dem neuesten Stand ist. Zudem ist es möglich, dass das Steuergerät eine aktualisierte Version des PTP-Softwareabbilds und/oder eine aktualisierte Version des Mesh-Softwareabbilds bei Bedarf an das Endgerät überträgt. Die Übertragung der aktualisierten Version kann sowohl mittels der Punkt-zu-Punkt-Verbindung als auch mittels des Mesh-Netzwerks erfolgen.

Zusammen mit der Übertragung des jeweiligen Softwareabbilds kann zugleich auch eine erste Konfiguration des Endgeräts erfolgen. Hierzu können beispielsweise gewünschte Parameter des Endgeräts direkt in das jeweilige Softwareabbild geschrieben werden. Die einzustellenden Parameter bzw. die einzustellende Konfiguration kann dann insbesondere im Steuergerät entsprechend geändert oder angepasst werden.

Weiterhin ist auch das bereits erwähnte Zurückkommen zu der Punkt-zu-Punkt-Verbindung möglich, indem das PTP-Softwareabbild wieder anstelle des Mesh-Softwareabbilds verwendet wird.

Bevorzugt wird nach dem Umschalten auf ein anderes Softwareabbild (also von dem PTP-Softwareabbild auf das Mesh-Softwareabbild oder andersherum) ein Neustart (Reboot) des Endgeräts oder zumindest des Software-Defined-Radios durchgeführt.

Gemäß einer weiteren vorteilhaften Ausführungsform werden Einstellung des Endgeräts betreffend die Punkt-zu-Punkt-Verbindung und/oder die Verbindung mit dem Mesh-Netzwerk in dem Steuergerät und/oder in dem Hub gespeichert.

Die Speicherung der Einstellungen des Endgeräts kann beispielsweise vor dem Aufspielen des Mesh-Softwareabbilds und/oder vor dem Aufspielen des PTP-Softwareabbilds erfolgen, um die Konfiguration bzw. Einstellungen der Punkt-zu-Punkt-Verbindung und/oder der Verbindung mit dem Mesh-Netzwerk zu sichern. Hierdurch lässt sich der Vorteil erzielen, dass beim Zurückgehen auf z.B. die Punkt-zu-Punkt-Verbindung die Einstellungen vom Steuergerät zurück an das Endgerät übertragen werden können, sodass beispielsweise ein Pairing mit einem Bluetoothgerät erhalten bleiben kann. Das Steuergerät kann die gespeicherten Einstellungen entweder lokal speichern und/oder z.B. auf einen Server des Anbieters übertragen. Auch eine Speicherung in dem Hub und/oder ein Weiterleiten der Einstellungen mittels des Hubs an einen Server des Anbieters sind möglich.

Gemäß einer weiteren vorteilhaften Ausführungsform kommuniziert der Hub nach dem Umstellen des Endgeräts auf eine Verbindung mit dem Mesh-Netzwerk mit dem Steuergerät mittels einer drahtlosen Datenverbindung, wobei die drahtlose Datenverbindung ein von dem Mesh-Netzwerk unterschiedliches Kommunikationsprotokoll verwendet. Neben dem Kommunikationsprotokoll kann sich die drahtlose Datenverbindung zwischen dem Steuergerät und dem Hub auch durch die verwendeten Frequenzen, Funkstandards und/oder Sendeleistungen unterscheiden. Beispielsweise kann der Hub mit dem Steuergerät mittels WLAN (WiFi), Bluetooth, Bluetooth-Low-Energy (BLE) und dergleichen kommunizieren. Der Hub kann dementsprechend als "Brücke" (Bridge/Gateway) eingesetzt werden, wobei der Hub Steuerbefehle und/oder Daten zur Konfiguration und/oder Steuerung des Endgeräts bevorzugt derart übersetzt, dass diese mittels des Mesh-Netzwerks an das Endgerät übertragen werden können.

Gemäß einer weiteren vorteilhaften Ausführungsform werden Einstellungen des Hubs in dem Steuergerät und/oder in einem separaten Speicher gespeichert, wobei die gespeicherten Einstellungen bei einem Ersetzen des Hubs in den ersetzten Hub geladen werden. Die Einstellungen des Hubs können beispielsweise mittels der drahtlosen Datenverbindung an das Steuergerät übertragen werden. Alternativ oder zusätzlich kann der Hub auch eine Internet-Verbindung besitzen und seine Einstellungen z.B. auf einem Server des Anbieters (das heißt in der "Cloud") speichern. Vorteilhafterweise ist ein Austausch des Hubs dann reibungslos und insbesondere auf automatisierte Art und Weise möglich.

Gemäß einer weiteren vorteilhaften Ausführungsform handelt es sich bei der Punkt-zu-Punkt-Verbindung um eine Bluetooth-Low-Energy-(BLE-)Verbindung und/oder handelt es sich bei dem Mesh-Netzwerk um ein ZigBee-Netzwerk. Der Vorteil der BLE-Verbindung liegt insbesondere in einem sehr geringen Stromverbrauch einerseits. Andererseits kann BLE auch dynamisch zwischen Stromspar- und Datenübertragungsmodi hin- und hergeschaltet werden, wobei die von BLE zur Verfügung gestellten Datenraten für die Hausautomation geeignet sind. Das ZigBee-Netzwerk kann beispielsweise einen einzelnen Hub und ein einzelnes Endgerät oder auch einen oder mehrere Hubs zusammen mit mehreren Endgeräten umfassen. Die Endgeräte können ausgebildet sein, Daten weiterzuleiten, sodass auch Daten an Endgeräte übertragen werden können, die nicht direkt vom Hub aus erreicht werden können.

Gemäß einer weiteren vorteilhaften Ausführungsform wechselt das Endgerät automatisch zwischen der Punkt-zu-Punkt-Verbindung und der Verbindung mit dem Mesh-Netzwerk hin und her, insbesondere falls das Endgerät länger als einen vorbestimmten Zeitraum keine Daten empfängt. Empfängt das Endgerät beispielsweise länger als eine Stunde, länger als einen Tag oder länger als zwei Tage keine Daten, kann davon ausgegangen werden, dass die Punkt-zu-Punkt-Verbindung oder das Mesh-Netzwerk nicht mehr benötigt wird. In diesem Fall kann das Endgerät von sich aus zu der jeweils anderen Verbindungsart wechseln. Hierdurch wird es beispielsweise möglich, dass nach längerer Inaktivität der Punkt-zu-Punkt-Verbindung sich das Endgerät automatisch dem Mesh-Netzwerk anschließt.

Alternativ kann das Steuergerät jeweils veranlassen, dass das Endgerät zwischen der Punkt-zu-Punkt-Verbindung und der Verbindung mit dem Mesh-Netzwerk hin und her wechselt. Es versteht sich, dass ein automatisches Hin- und Herwechseln insbesondere dann möglich ist, wenn sowohl das PTP-Softwareabbild als auch das Mesh-Softwareabbild in dem Endgerät gespeichert sind.

Schließlich betrifft die Erfindung ein System zur Hausautomation gemäß Anspruch 12.

Die vorstehenden Ausführungen zum erfindungsgemäßen Verfahren gelten für das erfindungsgemäße System entsprechend. Dies gilt insbesondere hinsichtlich Vorteilen und bevorzugten Ausführungsformen.

Nachfolgend wird die Erfindung rein beispielhaft unter Bezugnahme auf die Zeichnungen beschrieben. Es zeigen:
- Fig. 1: ein beispielhaftes System zur Hausautomation in schematischer Ansicht; und
- Fig. 2: den Übergang von einer Kommunikation mittels Punkt-zu-Punkt-Verbindung zu einer Kommunikation mittels eines Mesh-Netzwerks in schematischer Ansicht.

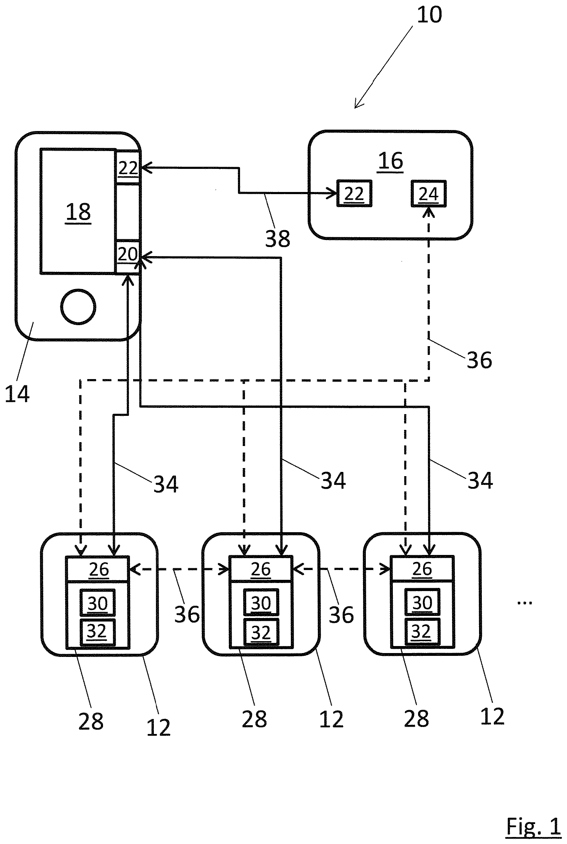

Fig. 1 zeigt ein System 10 zur Hausautomation. Das System 10 umfasst mehrere Endgeräte, welche in den Figuren beispielsweise als Schalter 12 dargestellt sind.

Das System umfasst weiterhin ein Steuergerät in der Form eines Smartphones 14 und einen Hub 16. Auf dem Smartphone 14 wird eine App 18 ausgeführt, welche zur Konfiguration und/oder Steuerung der Schalter 12 und damit der Endgeräte dient.

Das Smartphone 14 umfasst einen Bluetooth-Low-Energie-(BLE-)Transceiver 20 und einen WLAN-Transceiver 22.

Der Hub 16 umfasst ebenfalls einen WLAN-Transceiver 22 und einen ZigBee-Transceiver 24.

In den Schaltern 12 ist jeweils als Funkmodul ein Software-Defined-Radio (SDR) 26 vorgesehen. Zudem ist in den Schaltern 12 jeweils ein Speicherbaustein 28 angeordnet, welcher ein PTP-Softwareabbild 30 und ein Mesh-Softwareabbild 32 speichert. Wird das PTP-Softwareabbild 30 aktiviert, ist der Schalter 12 in der Lage mittels Bluetooth-Low-Energy mit dem Smartphone 14 zu kommunizieren. Wird jedoch das Mesh-Softwareabbild 32 aktiviert, ist der Schalter 12 jeweils in der Lage mittels ZigBee mit dem Hub 16 zu kommunizieren. Bei der Kommunikation mittels ZigBee sind die Schalter 12 zudem ausgebildet, Daten von dem Hub 16 an entferntere Schalter 12 weiterzuleiten.

Die unterschiedlichen Kommunikationsformen mittels Bluetooth-Low-Energy, ZigBee und WLAN sind in der Fig. 1 mittels BLE-Verbindungen 34, ZigBee-Verbindungen 36 und WLAN-Verbindungen 38 schematisch dargestellt.

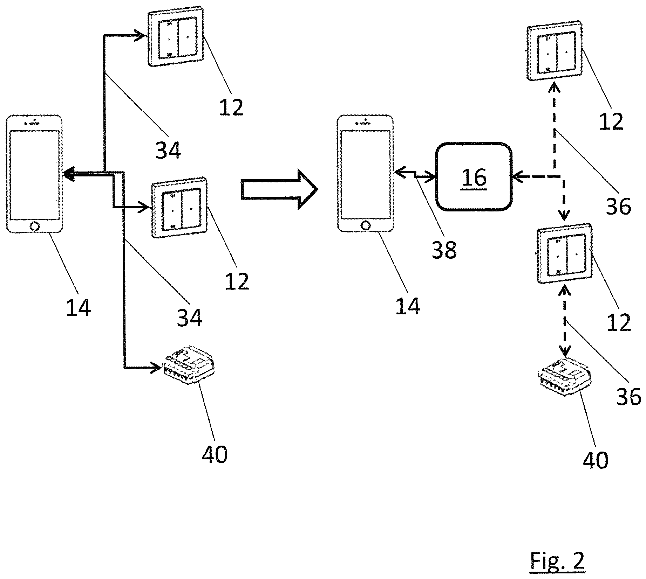

Fig. 2 zeigt das Smartphone 14, welches jeweils mittels BLE-Verbindungen 34 mit Schaltern 12 kommuniziert. Das Smartphone 14 kommuniziert auch mittels einer BLE-Verbindung 34 mit einem KNX-Gateway 40, das bedeutet mit einem weiteren Endgerät, welches ein Gateway für einen Feldbus zur Gebäude- / Hausautomation ist. Auch das KNX-Gateway 40 umfasst ein SDR 26. Die linke Seite der Fig. 2 betrifft also ein Einsatzszenario mit wenigen Endgeräten, welche mittels einer Punkt-zu-Punkt-Verbindung konfiguriert und/oder gesteuert werden (z.B. einen "Room Kit").

Soll nun der Übergang auf eine größere Anzahl von Endgeräten erfolgen (z.B. innerhalb eines "House Kits" - siehe die rechte Seite der Fig. 2), d.h. sollen die BLE-Verbindungen 34 durch ZigBee-Verbindungen 36 ersetzt werden, wird von dem Smartphone 14 an die Schalter 12 und das KNX-Gateway 40 ein Befehl zum Abbau der BLE-Verbindungen 34 und zum Umschalten auf die ZigBee-Verbindungen 36 gegeben. In den SDRs 26 wird dann jeweils das Mesh-Softwareabbild 32 verwendet, um mittels der ZigBee-Verbindungen 36 kommunizieren zu können.

Nach der Umstellung auf die ZigBee-Verbindungen 36 verbindet sich das Smartphone 14 mit dem Hub 16. Für diese Verbindung wird die WLAN-Verbindung 38 verwendet. Der Hub 16 kommuniziert danach mit den Schaltern 12 und dem KNX-Gateway 40 mittels der ZigBee-Verbindungen 36. Eine Konfiguration/Steuerung der Schalter 12 und des KNX-Gateways 40, welche auf dem Smartphone 14 vorgenommen wird, wird dann zunächst mittels der WLAN-Verbindung 38 an den Hub 16 und anschließend von dem Hub 16 mittels der ZigBee-Verbindungen 36 an die Schalter 12 und das KNX-Gateway 40 übertragen.

Aufgrund der (hier beispielhaft dargestellten) Verwendung der SDRs 26 ist eine Umschaltung zwischen den BLE-Verbindungen 34 und den ZigBee-Verbindungen 36 ohne Weiteres und in kurzer Zeit möglich, sodass ein flexibler Einsatz des Systems 10 ermöglicht wird.

### Bezugszeichenliste

- 10: System
- 12: Schalter
- 14: Smartphone
- 16: Hub
- 18: App
- 20: BLE-Transceiver
- 22: WLAN-Transceiver
- 24: ZigBee-Transceiver
- 26: SDR
- 28: Speicherbaustein
- 30: PTP-Softwareabbild
- 32: Mesh-Softwareabbild
- 34: BLE-Verbindung
- 36: ZigBee-Verbindung
- 38: WLAN-Verbindung
- 40: KNX-Gateway

## Patentansprüche

1. Verfahren zur Konfiguration und/oder Steuerung von Endgeräten (12, 40) der Hausautomation, wobei das Verfahren umfasst:
- Herstellen einer drahtlosen Punkt-zu-Punkt-Verbindung (34) zwischen einem Steuergerät (14) und zumindest einem Endgerät (12, 40) der Hausautomation, wenn nur ein oder wenige Endgeräte (12, 40) zu konfigurieren und/oder zu steuern sind,
- Durchführen einer Datenkommunikation zwischen dem Steuergerät (14) und dem Endgerät (12, 40) mittels der Punkt-zu-Punkt-Verbindung (34), um das Endgerät (12, 40) zu konfigurieren und/oder zu steuern,
**gekennzeichnet durch**
- Umstellen des Endgeräts (12, 40) **durch** Senden eines Befehls vom Steuergerät (14) zum Endgerät (12, 40) zum Abbau der Punkt-zu-Punkt-Verbindung (34) und zur Herstellung einer drahtlosen Verbindung mit einem Hub (16) oder einem anderen Endgerät (12, 40) eines Mesh-Netzwerks (36) bei Übergang auf eine größere Anzahl von Endgeräten (12, 40), wobei das Mesh-Netzwerk den Hub (16) und die größere Anzahl von Endgeräten (12, 40) enthält,
- Durchführen einer Datenkommunikation zwischen dem Endgerät (12, 40) und einem Hub (16) des Mesh-Netzwerks mittels des Mesh-Netzwerks (36), um das Endgerät (12, 40) zu konfigurieren und/oder zu steuern.

2. Verfahren nach Anspruch 1,
**dadurch gekennzeichnet, dass**
das Endgerät (12, 40) zu einem Zeitpunkt jeweils entweder nur die drahtlose Punkt-zu-Punkt-Verbindung (34) oder nur die drahtlose Verbindung mit dem Mesh-Netzwerk (36) unterhält und/oder verwendet.

3. Verfahren nach Anspruch 1 oder 2,
**dadurch gekennzeichnet , dass**
das Endgerät (12, 40) ein Software-Defined-Radio (SDR)(26) zur Herstellung der drahtlosen Punkt-zu-Punkt-Verbindung (34) und der drahtlosen Verbindung mit dem Mesh-Netzwerk (36) verwendet.

4. Verfahren nach zumindest einem der vorstehenden Ansprüche,
**dadurch gekennzeichnet , dass**
das Endgerät (12, 40) ein Punkt-zu-Punkt-Softwareabbild, PTP-Softwareabbild (30), zur Herstellung der drahtlosen Punkt-zu-Punkt-Verbindung (34) und ein Mesh-Softwareabbild (32) zur Herstellung der drahtlosen Verbindung mit dem Mesh-Netzwerk (36) verwendet.

5. Verfahren nach Anspruch 4,
**dadurch gekennzeichnet , dass**
das PTP-Softwareabbild (30) und das Mesh-Softwareabbild (32) beide in dem Endgerät (12, 40) gespeichert sind,
und/oder
das Mesh-Softwareabbild (32) mittels der Punkt-zu-Punkt-Verbindung (34) an das Endgerät (12, 40) übertragen wird.

6. Verfahren nach zumindest einem der vorstehenden Ansprüche,
**dadurch gekennzeichnet , dass**
Einstellungen des Endgeräts (12, 40) betreffend die Punkt-zu-Punkt-Verbindung (34) und/oder die Verbindung mit dem Mesh-Netzwerk (36) in dem Steuergerät (14) und/oder in dem Hub (16) gespeichert werden.

7. Verfahren nach zumindest einem der vorstehenden Ansprüche,
**dadurch gekennzeichnet , dass**
der Hub (16) nach dem Umstellen des Endgeräts (12, 40) auf eine Verbindung mit dem Mesh-Netzwerk (36) mit dem Steuergerät (14) mittels einer drahtlosen Datenverbindung (38) kommuniziert, wobei die drahtlose Datenverbindung (38) ein von dem Mesh-Netzwerk unterschiedliches Kommunikationsprotokoll verwendet.

8. Verfahren nach zumindest einem der vorstehenden Ansprüche,
**dadurch gekennzeichnet, dass**
Einstellungen des Hubs (16) in dem Steuergerät (14) und/oder in einem separaten Speicher gespeichert werden, wobei die gespeicherten Einstellungen bei einem Ersetzen des Hubs (16) in den ersetzten Hub geladen werden.

9. Verfahren nach zumindest einem der vorstehenden Ansprüche,
**dadurch gekennzeichnet, dass**
der Hub (16) eine an dem Steuergerät (14) vorgenommene Konfigurierung und/oder Steuerung des Endgeräts (12, 40) von dem Steuergerät (14) empfängt und an das Endgerät (12, 40) übermittelt.

10. Verfahren nach zumindest einem der vorstehenden Ansprüche,
**dadurch gekennzeichnet, dass**
es sich bei der Punkt-zu-Punkt-Verbindung um eine Bluetooth-Low-Energy (BLE)-Verbindung (34) handelt und/oder dass es sich bei dem Mesh-Netzwerk um ein ZigBee-Netzwerk (36) handelt.

11. Verfahren nach zumindest einem der vorstehenden Ansprüche,
**dadurch gekennzeichnet, dass**
das Endgerät (12, 40) automatisch zwischen der Punkt-zu-Punkt-Verbindung (34) und der Verbindung mit dem Mesh-Netzwerk (36) hin- und herwechselt, insbesondere falls das Endgerät (12, 40) länger als einen vorbestimmten Zeitraum keine Daten empfängt.

12. System (10) zur Hausautomation, umfassend zumindest ein Endgerät (12, 40) zur Hausautomation, ein Steuergerät (14) und einen Hub (16) eines Mesh-Netzwerks, wobei das System (10) ausgebildet ist,
- eine drahtlosen Punkt-zu-Punkt-Verbindung (34) zwischen dem Steuergerät und dem zumindest einem Endgerät (12, 40) herzustellen, wenn nur ein oder wenige Endgeräte (12, 40) zu konfigurieren und/oder zu steuern sind,
- eine Datenkommunikation zwischen dem Steuergerät (14) und dem Endgerät (12, 40) mittels der Punkt-zu-Punkt-Verbindung (30) durchzuführen, um das Endgerät (12, 40) zu konfigurieren und/oder zu steuern,
**dadurch gekennzeichnet, dass** das System (10) ausgebildet ist,
- das Endgerät (12, 40) durch Senden eines Befehls vom Steuergerät (14) zum Endgerät (12, 40) umzustellen, um die Punkt-zu-Punkt-Verbindung (34) abzubauen und eine drahtlosen Verbindung mit dem Hub (16) oder einem anderen Endgerät (12, 40) des Mesh-Netzwerks (36) bei Übergang auf eine größere Anzahl von Endgeräten (12, 40) herzustellen, wobei das Mesh-Netzwerk den Hub (16) und die größere Anzahl von Endgeräten (12, 40) enthält,
- eine Datenkommunikation zwischen dem Endgerät (12, 40) und dem Hub (16) mittels des Mesh-Netzwerks (36) durchzuführen, um das Endgerät (12, 40) zu konfigurieren und/oder zu steuern.

## Claims

1. A method for configuring and/or controlling home automation end devices (12, 40), wherein the method comprises:
- establishing a wireless point-to-point connection (34) between a control device (14) and at least one home automation end device (12, 40) if only one or a few of the end devices (12, 40) are to be configured and/or controlled;
- performing a data communication between the control device (14) and the end device (12, 40) by means of the point-to-point connection (34) in order to configure and/or to control the end device (12, 40),
**characterized by**
- switching the end device (12, 40) by sending a command from the control device (14) to the end device (12, 40) to cancel the point-to-point connection (34) and to establish a wireless connection with a hub (16) or another end device (12, 50) of a mesh network (36) on a transition to a larger number of end devices (12, 40), wherein the mesh network includes the hub (16) and the larger number of end devices (12, 40); and
- performing a data communication between the end device (12, 40) and a hub (16) of the mesh network by means of the mesh network (36) in order to configure and/or to control the end device (12, 40).

2. A method in accordance with claim 1,
**characterized in that**,
at a point in time, the end device (12, 40) respectively either only maintains and/or uses the wireless point-to-point connection (34) or only maintains and/or uses the wireless connection with the mesh network (36).

3. A method in accordance with claim 1 or 2,
**characterized in that**
the end device (12, 40) uses a software-defined radio (SDR) (26) to establish the wireless point-to-point connection (34) and the wireless connection with the mesh network (36).

4. A method in accordance with at least one of the preceding claims,
**characterized in that**
the end device (12, 40) uses a point-to point software image, PTP software image (30), to establish the wireless point-to-point connection (34) and a mesh software image (32) to establish the wireless connection with the mesh network (36).

5. A method in accordance with claim 4,
**characterized in that**
the PTP software image (30) and the mesh software image (32) are both stored in the end device (12, 40);
and/or
**in that** the mesh software image (32) is transmitted to the end device (12, 40) by means of the point-to-point connection (34).

6. A method in accordance with at least one of the preceding claims,
**characterized in that**
settings of the end device (12, 40) relating to the point-to-point connection (34) and/or to the connection with the mesh network (36) are stored in the control device (14) and/or in the hub (16).

7. A method in accordance with at least one of the preceding claims,
**characterized in that**
the hub (16) communicates with the control device (14) by means of a wireless data connection (38) after the end device (12, 40) has been switched to a connection with the mesh network (36), with the wireless data connection (38) using a communication protocol different from the mesh network.

8. A method in accordance with at least one of the preceding claims,
**characterized in that**
settings of the hub (16) are stored in the control device (14) and/or in a separate memory, with the stored settings being loaded into the replaced hub on a replacement of the hub (16).

9. A method in accordance with at least one of the preceding claims,
**characterized in that**
the hub (16) receives a configuration and/or a control of the end device (12, 40) performed at the control device (14) from the control device (14) and transmits it to the end device (12, 40).

10. A method in accordance with at least one of the preceding claims,
**characterized in that**
the point-to-point connection is a Bluetooth Low Energy (BLE) connection (34); and/or **in that** the mesh network is a ZigBee network (36).

11. A method in accordance with at least one of the preceding claims,
**characterized in that**
the end device (12, 40) automatically switches back and forth between the point-to-point connection (34) and the connection with the mesh network (36), in particular if the end device (12, 40) does not receive any data for longer than a predetermined period of time.

12. A home automation system (10) comprising at least one home automation end device (12, 40); a control device (14); and a hub (16) of a mesh network, wherein the system (10) is configured
- to establish a wireless point-to-point connection (34) between the control device and the at least one end device (12, 40) if only one or a few of the end devices (12, 40) are to be configured and/or controlled;
- to perform a data communication between the control device (14) and the end device (12, 40) by means of the point-to-point connection (34) in order to configure and/or to control the end device (12, 40),
**characterized in that** the system (10) is configured
- to switch the end device (12, 40) by sending a command from the control device (14) to the end device (12, 40) in order to cancel the point-to-point connection (34) and to establish a wireless connection with the hub (16) or another end device (12, 50) of the mesh network (36) on a transition to a larger number of end devices (12, 40), wherein the mesh network includes the hub (16) and the larger number of end devices (12, 40); and
- to perform a data communication between the end device (12, 40) and the hub (16) by means of the mesh network (36) to configure and/or to control the end device (12, 40).

## Revendications

1. Procédé de configuration et/ou de commande de terminaux (12, 40) de la domotique, le procédé comprenant les étapes consistant à :
- établir une liaison point à point sans fil (34) entre un dispositif de commande (14) et au moins un terminal (12, 40) de la domotique lorsque seulement un ou quelques terminaux (12, 40) doivent être configurés et/ou commandés,
- réaliser une communication de données entre le dispositif de commande (14) et le terminal (12, 40) au moyen de la liaison point à point (34) afin de configurer et/ou de commander le terminal (12, 40),
**caractérisé par** les étapes consistant à :
- commuter le terminal (12, 40) par l'envoi d'une instruction du dispositif de commande (14) au terminal (12, 40) afin de supprimer la liaison point à point (34) et d'établir une liaison sans fil avec un concentrateur (16) ou un autre terminal (12, 40) d'un réseau maillé (36) lors du passage à un plus grand nombre de terminaux (12, 40), le réseau maillé contenant le concentrateur (16) et le plus grand nombre de terminaux (12, 40),
- réaliser une communication de données entre le terminal (12, 40) et un concentrateur (16) du réseau maillé au moyen du réseau maillé (36) afin de configurer et/ou de commander le terminal (12, 40).

2. Procédé selon la revendication 1,
**caractérisé en ce que**
le terminal (12, 40) maintient et/ou utilise à un instant donné soit uniquement la liaison point à point sans fil (34), soit uniquement la liaison sans fil avec le réseau maillé (36).

3. Procédé selon la revendication 1 ou 2,
**caractérisé en ce que**
le terminal (12, 40) utilise une radio logicielle (Software Defined Radio, SDR) (26) pour établir la liaison point à point sans fil (34) et la liaison sans fil avec le réseau maillé (36).

4. Procédé selon au moins l'une des revendications précédentes,
**caractérisé en ce que**
le terminal (12, 40) utilise une image logicielle point à point, image logicielle PTP (30), pour établir la liaison point à point sans fil (34) et une image logicielle maillée (32) pour établir la liaison sans fil avec le réseau maillé (36).

5. Procédé selon la revendication 4,
**caractérisé en ce que**
l'image logicielle PTP (30) et l'image logicielle maillée (32) sont toutes deux stockées dans le terminal (12, 40),
et/ou
l'image logicielle maillée (32) est transmise au terminal (12, 40) au moyen de la liaison point à point (34).

6. Procédé selon au moins l'une des revendications précédentes,
**caractérisé en ce que**
des réglages du terminal (12, 40) concernant la liaison point à point (34) et/ou la liaison avec le réseau maillé (36) sont stockés dans le dispositif de commande (14) et/ou dans le concentrateur (16).

7. Procédé selon au moins l'une des revendications précédentes,
**caractérisé en ce que**
le concentrateur (16) communique avec le dispositif de commande (14) au moyen d'une liaison de données sans fil (38) après la commutation du terminal (12, 40) pour une liaison avec le réseau maillé (36), la liaison de données sans fil (38) utilisant un protocole de communication différent de celui du réseau maillé.

8. Procédé selon au moins l'une des revendications précédentes,
**caractérisé en ce que**
des réglages du concentrateur (16) sont stockés dans le dispositif de commande (14) et/ou dans une mémoire séparée, les réglages stockés étant chargés dans le concentrateur remplacé lors d'un remplacement du concentrateur (16).

9. Procédé selon au moins l'une des revendications précédentes,
**caractérisé en ce que**
le concentrateur (16) reçoit du dispositif de commande (14) une configuration et/ou une commande du terminal (12, 40) effectuée sur le dispositif de commande (14) et la transmet au terminal (12, 40).

10. Procédé selon au moins l'une des revendications précédentes,
**caractérisé en ce que**
la liaison point à point est une liaison Bluetooth basse énergie (BLE) (34) et/ou **en ce que** le réseau maillé est un réseau ZigBee (36).

11. Procédé selon au moins l'une des revendications précédentes,
**caractérisé en ce que**
le terminal (12, 40) alterne automatiquement entre la liaison point à point (34) et la liaison avec le réseau maillé (36), en particulier si le terminal (12, 40) ne reçoit pas de données pendant une durée supérieure à une durée prédéterminée.

12. Système (10) pour la domotique, comprenant au moins un terminal (12, 40) pour la domotique, un dispositif de commande (14) et un concentrateur (16) d'un réseau maillé, le système (10) étant conçu pour :
- établir une liaison point à point sans fil (34) entre le dispositif de commande et ledit au moins un terminal (12, 40) lorsque seulement un ou quelques terminaux (12, 40) doivent être configurés et/ou commandés,
- réaliser une communication de données entre le dispositif de commande (14) et le terminal (12, 40) au moyen de la liaison point à point (30) afin de configurer et/ou de commander le terminal (12, 40),
**caractérisé en ce que** le système (10) est conçu pour :
- commuter le terminal (12, 40) par l'envoi d'une instruction du dispositif de commande (14) au terminal (12, 40) afin de supprimer la liaison point à point (34) et d'établir une liaison sans fil avec le concentrateur (16) ou un autre terminal (12, 40) du réseau maillé (36) lors du passage à un plus grand nombre de terminaux (12, 40), le réseau maillé contenant le concentrateur (16) et le plus grand nombre de terminaux (12, 40),
- réaliser une communication de données entre le terminal (12, 40) et le concentrateur (16) au moyen du réseau maillé (36) afin de configurer et/ou de commander le terminal (12, 40).
